Europäisches Patentamt

European Patent Office

Office européen des brevets

(11) Publication number: **0 076 022**
**B1**

(12) **EUROPEAN PATENT SPECIFICATION**

(45) Date of publication of patent specification: **24.09.86**

(51) Int. Cl.⁴: **H 02 M 3/335, H 02 M 7/537**

(21) Application number: **82303447.5**

(22) Date of filing: **01.07.82**

(54) **Improvement in switched-mode power supplies.**

(30) Priority: **28.09.81 FR 8118236**

(43) Date of publication of application:
**06.04.83 Bulletin 83/14**

(45) Publication of the grant of the patent:
**24.09.86 Bulletin 86/39**

(84) Designated Contracting States:
**BE DE FR GB IT NL**

(56) References cited:
**US-A-3 435 320**
**US-A-3 925 717**
**US-A-4 005 351**
**US-A-4 183 080**

(73) Proprietor: **BURROUGHS CORPORATION**
**(a Michigan corporation)**
**Burroughs Place**
**Detroit, Michigan 48232 (US)**

(72) Inventor: **Lethellier, Patrice Raynaud Albert**
**84 Rue Florent Everard**
**F-62260 Auchel (FR)**

(74) Representative: **Kirby, Harold Douglas Benson**
**et al**
**G. F. Redfern & Company Marlborough Lodge**
**14 Farncombe Road**
**Worthing West Sussex BN11 2BT (GB)**

Courier Press, Leamington Spa, England.

## Description

The present invention relates to an output stage for switched-mode electrical power supplies.

In switched-mode power supplies it is general that the voltage of an A.C. utility main is rectified and smoothed to provide a D.C. power source for providing energy to an electrical load controlled by an oscillator-driven switching power output stage.

The output stage generally comprises a transistor requiring considerable base current to achieve saturation and minimise power dissipation therein. The dropping of volts from the D.C. power source in order to accommodate the high base current necessitates the energy-wasteful and difficult-to-dissipate generation of much heat, which feature of switching output stages is most undesirable and contrasts with their otherwise good thermal efficiency.

The high base current required to saturate the output transistor requires the provision of much energy to operate the output stage. The output-stage driving oscillator, generally employs overworked base-driving transistors.

United States Patent 3,925,717 discloses a transistor switching D.C. converter wherein a shunt transistor is provided selectably to short the base of a power transistor to ground in response to application of an external signal. Drive for the base of the power transistor is derived from a secondary of a transformer driven by the collector of the power transistor and bias is provided to the base of the power transistor via a series inductor. When the shunt transistor is caused to become a near short circuit, the energy stored in the inductor is transferred to the load of the power transistor and requires to be re-established upon the next cycle of operation of the D.C. converter. The present invention seeks to provide improvement thereover by providing not only a circuit to provide increasing current to the inductor when the power transistor is conducting but also a diode circuit operable when the power transistor is non-conducting to store the current memorised by the inductor in a current loop including the shunt transistor, a diode and the inductor. When the shunt transistor is once again made open circuit the current previously provided in the inductor is once again made available to the base of the power transistor, thereby eliminating the need for replacement of the energy in whole or in part stored in the inductor.

United States Patent 4,005,351 discloses a self-exciting D.C. invertor where current is provided to the base of a power transistor via a current regulator and where the base of the power transistor may be shunted to ground by a shunt transistor selectably operable in the event of the invertor providing excess D.C. voltage to its load or requiring excess current to be provided to the load. The present invention seeks to provide improvement thereover by arranging for the energy required to drive the base of the power transistor to be provided by a secondary winding of the power transistor load transformer, by providing a current store in the form of an inductor to memorise the current provided to the base of the power transistor, and by providing first and second diode circuits whereby energy delivered to the inductor during the conductive period of the power transistor is stored in a current loop including the shunt transistor and delivered up to the base of the power transistor upon next instance of the shunt transistor being made open circuit. In this way, energy supplied to the inductor during conduction of a power transistor does not require to be replaced in whole or in part during the next conductive epoch of the power transistor.

It is common to provide an output current versus time waveform in such an output stage which is trapezoidal in preference to being serrasoidal, so that the peak current in the secondary of any transformer coupled thereto may be closer to the mean value of that current to minimise the stress experienced by rectifiers and smoothing capacitors in the secondary circuit. The achieving of that trapezoidal waveform has been accompanied by the use of many additional components. The storage time of output transistors has meant that such stages cannot operate properly with small primary-current duty cycles. This failure to so operate results in heating of the output transistor or transistors.

The present invention seeks to provide an output state for a switched-mode power supply which allows for being driven with a low energy signal from an oscillator, does not necessitate the dissipation of large amounts of energy from a D.C. power source, and operates into the primary of a transformer with a trapezoidal current-versus-time waveform even at low duty cycles despite simplicity of construction.

The present invention consists in an output stage for a switched mode power supply comprising a power transistor whose emitter is coupled to ground; a transformer comprising a primary winding coupled to receive a first current from the collector of said power transistor and further comprising a secondary winding, a first end of which is connected to the emitter of said power transistor and the second end of which is coupled through an inductor to the base of said power transistor to provide a second current in a given direction, operative to cause said power transistor to conduct when said first current is increasing in magnitude; and a shunt transistor coupled to divert said second current from said base of said power transistor to ground in response to an applied signal to cause said power transistor to cease conducting; said output stage being characterised by said output stage comprising a current regulator coupled in series with the second end of said secondary winding and operative to control said second current to have a predetermined value and only to flow in said given direction and by the common point between said inductor and said current regulator being coupled to ground by a current storage diode; where, in the event of said shunt transistor being made conductive and diverting said second current from said base of said power transistor said second current is stored in a maintaining current loop including said inductor, said shunt transistor and said current storage diode; and where, in the later event of said shunt transistor once more being made non-conductive, said stored second current is made once more available to said base of said power transistor.

Preferred embodiments are specified in the claims 2 to 4.

The invention is further explained, by way of an example, by the following description in conjunction with the appended drawings, in which:

Figure 1 shows a schematic diagram of the switched-mode power supply output stage which is the preferred embodiment.

Figure 2 shows those parts of Figure 1 which are conducting when the collector of the power transistor is carrying current.

Figure 3A shows the collector current versus time relationship for the power transistor.

Figure 3B shows the base current versus time relationship for the power transistor.

Figure 4 shows those parts of Figure 1 which carry current at the instant the power transistor is switched off.

Figure 5 shows those parts of Figure 1 which carry current when the power transistor is completely switched off.

Figure 6 shows those parts of Figure 1 which carry current at the instant the power transistor is switched on.

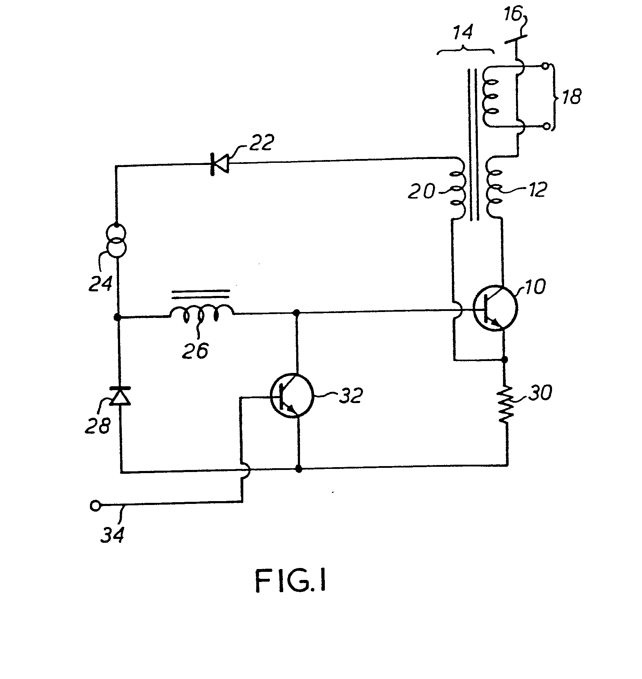

Figure 1 shows a schematic representation of the preferred embodiment.

The collector of an npn power transistor 10 is connected to a first end of a primary winding 12 of a transformer 14. The second end of the primary winding 12 is provided as a power supply connection 16 for providing positive D.C. power, derived from rectification and smoothing of an electrical utility main, for the transformer 14.

A power winding 18 of the transformer 14 provides A.C. power for rectification and smoothing as the output of the switched-mode power supply. A bias winding 20 has a first of its ends coupled to the anode of a first diode 22 and the second of its ends coupled to the emitter of the power transistor 10. The sense of the bias winding 20 is such that when the current through the power transistor 10 and primary winding 12 is increasing, the first diode 22 conducts.

The cathode of the first diode is coupled to a constant current source 24 which can be of any kind known in the art.

The constant current source 24 is coupled to a first end of an inductor 26 and to the cathode of a second diode 28. The anode of the second diode 28 is connected to ground. The second end of the inductor is connected to the base of the power transistor 10.

A resistor 30 is connected between the emitter of the power transistor 10 and ground. The collector of an npn shunt transistor 32 is connected to the base of the power transistor 10. The emitter of the shunt transistor 32 is connected to ground. The base of the shunt transistor 32 is connected to an external control line 34.

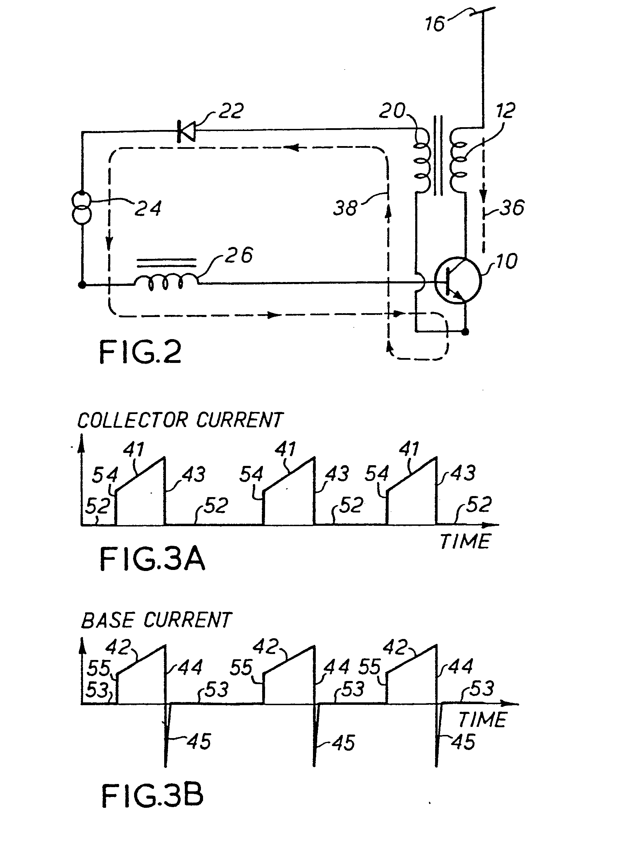

Figure 2 shows the flow of current while the power transistor 10 is conducting.

During this time the shunt transistor 32 is non-conducting, the signal on the external control line being less than 0.7 volts more positive than ground.

The power transistor 10 conducts an increasing current 36 through the transformer primary winding 12. The increasing power transistor current 36 incudes an EMF in the bias winding 20 such that the diode 22 conducts and a loop current 38, whose magnitude is predetermined by the constant current generator 24 and which is "memorised" by the inductor 26, flows through the base-emitter junction of the power transistor 10 turning the power-transistor 10 on, and returning to the bias winding 20 via the emitter of the power transistor 10.

Figure 3A shows the collector current waveform for the power-transistor 10 mapped against time. The operation of the circuit of Figure 2 corresponds to the rising current portions 41 of Figure 3A.

Figure 3B shows the base current waveform for the power transistor 10 mapped against time. The part of the operation of the circuit indicated by Figure 2 corresponds to the rising base-current portions 42 of Figure 3B.

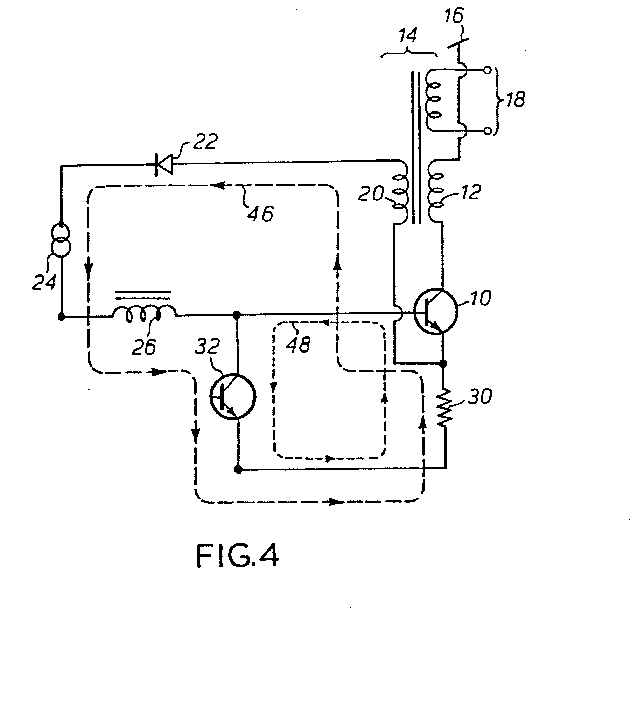

Figure 4 shows the action of the circuit as the shunt transistor 32 is switched on by the application of a voltage in excess of 0.7 volts more positive than ground to the external control line 34 of Figure 1.

This switching on of the shunt transistor 32 initiates the switching off of the power transistor 10 and corresponds to the regions of fall of collector current 43 of Figure 3A and to the regions of rapid fall 44 and of overshoot 45 of Figure 3B.

As the shunt transistor 32 is switched on the loop current 38 of Figure 2 is diverted to ground and circulates back to the bias winding 20 via the resistor 30 to become the switching-off current 46 of Figure 4. The current 46 maintains its previous value by virtue of the inertia that the inductor 26 imparts thereto.

The switching off current 46, by flowing through the resistor 30 as shown, reverse biases the emitter-base junction of the power transistor 10 which responds by becoming non-conductive. The base storage charge of the power-transistor 10 is rapidly discharged to ground through the shunt transistor 32, resulting in the reverse base-current overshoots 45 of Figure 3B indicative of the base-discharge current 48 of Figure 4.

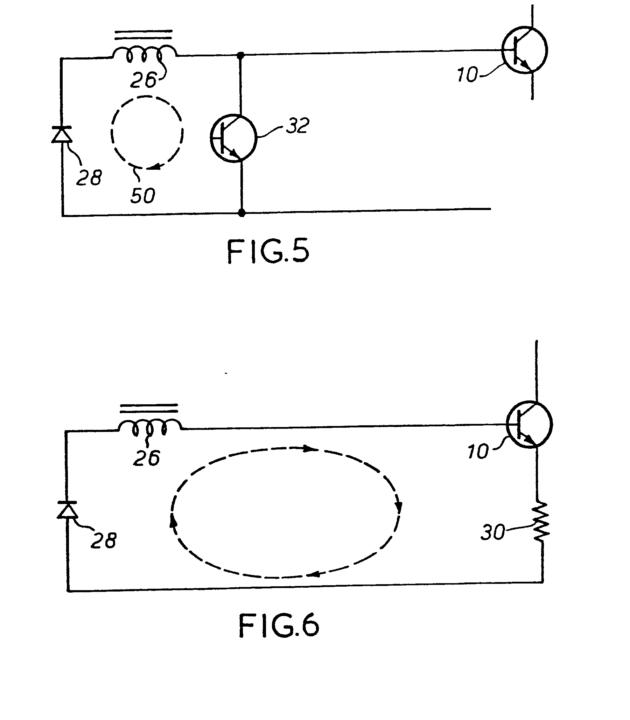

Figure 5 shows the conditions prevailing after the power transistor 10 has been switched off.

The shunt transistor 32 remains switched on in response to the continuing signal on the external control line 34 of Figure 1. The current flow ceases through the bias winding 20, first diode 22 and constant current source 24 combination, since no energy is being provided to the transformer 14.

The current instead flows round the loop comprising the second diode 28, the inductor 26 and the shunt transistor 32 as a maintaining current 50. The inertia of the inductor 26 ensures that the maintaining current 50 is unaltered from the value previously controlled by the constant current source. The time constant of the inductor 26 is chosen such that the maintaining current 50 remains substantially undiminished during any normal interval between periods of conductivity of the power-transistor 10. The second diode 28 is non-conducting except when carrying the maintaining current 50. This stage in the operation of the circuit corresponds to the zero collector current portions 52 of Figure 3A and to the zero base current portions 53 of Figure 3B.

Figure 6 shows the conditions prevailing when the power transistor 10 is being switched back on, corresponding to the rising collector current portions 54 of Figure 3A and to the rising base current portions 55 of Figure 3B.

The shunt transistor 32 of Figure 1 is switched off. The maintaining current 50 of Figure 5 is instantaneously diverted through the base emitter junction of the power transistor 10 causing its rapid switch-on. Thereafter operating conditions cycle back through these shown in Figure 2 and so on.

The foregoing description of the action of the circuit is based in the assumption that the circuit is already working. Those skilled in the art will be aware that the circuit must be started and that such starting can be achieved by the deliberate provision of a small bias current to the base of the power transistor 10 which can be used by the shunt transistor 32 as a switchable source of control for the power transistor 10 to build up energy in the bias winding 20 of the transformer 14, and in the inductor 26 until that energy becomes limited by the controlling action of the constant current source 24. The starting bias current can then be removed or left present as is desired.

The constant current source can be either an active semiconductor circuit, or a non-linear conducting circuit element such as a baretter, a positive temperature coefficient resistive device, or the like. The control of the current need not be more precise than is required to prevent energy from the transformer 14 injected into the rest of the circuit becoming damagingly large. Certain types of constant current sources 24 only allow current to pass therethrough in one direction, and thus allow the first diode 22 to be dispensed with.

The example described has been given with reference to a power-transistor output stage. With simple modifications the circuit can be made to support a push-pull pair of output transistors, or to drive one or more thyristors, triacs or the like.

The output of the power supply of which the invention is shown as a part has thus far been described as being derived from a power winding 18 of the transformer 14. It is to be appreciated that the transformer 14 need not have a power winding 18, being used solely for exciting the bias winding 20, and that other electrical loads, can be connected to the collector of the power transistor 10.

The output stage of the preferred embodiment is shown as being driven by an external oscillator. Those skilled in the art will appreciate that such a stage can be made self-oscillating.

**Claims**

1. An output stage for a switched mode power supply comprising a power transistor (10) whose emitter is coupled to ground; a transformer (14) comprising a primary winding (12) coupled to receive a first current (36) from the collector of said power transistor (10) and further comprising a secondary winding (20) a first end of which is connected to the emitter of said power transistor and the second end of which is coupled through an inductor (26) to the base of said power transistor (10) to provide a second current (38) in a given direction operative to cause said power transistor (10) to conduct when said first current (36) is increasing in magnitude; and a shunt transistor (32) coupled to divert said second current (38) from said base of said power transistor (10) to ground in response to an applied signal (34) to cause said power transistor (10) to cease conducting; said output stage being characterised by said output stage comprising a current regulator (24) coupled in series with the second end of said secondary winding (20) and operative to control said second current (38) to have a predetermined value and only to flow in said given direction and by the common point between said inductor (26) and said current regulator (24) being coupled to ground by a current storage diode (28); where, in the event of said shunt transistor (32) being made conductive and diverting said second current (38) from said base of said power transistor (10) said second current (38) is stored in a maintaining current loop (50) including said inductor (26), said shunt transistor (32) and said current storage diode (28); and where, in the later event of said shunt transistor (32) once more being made non-conductive, said stored (50) second current (38) is made once more available to said base of said power transistor (10).

2. An output stage according to Claim 1, wherein said current regulator (24) comprises a series diode (22) in series therewith for ensuring said flow of said second current (38) only in said first direction.

3. An output stage according to Claim 1 or Claim 2, wherein said emitter of said power transistor (10) is coupled to ground through a resistor (30).

4. An output stage according to any of the preceding claims wherein said transformer (14) comprises a power winding (18) for providing power output therefrom.

**Patentansprüche**

1. Ausgangsstufe für eine Taktstromversorgung mit einem Leistungstransistor (10), dessen Emitter mit Masse verbunden ist; einem Transformator (14), der eine Primärwicklung (12) zur Aufnahme eines ersten Stromes (36) vom Kollektor des Leistungstransistors (10) und darüber hinaus eine Sekundärwicklung (20) enthält, deren erstes Ende mit dem Emitter des Leistungstransistors und deren zweites Ende über eine Drossel (26) mit der Basis des Leistungstransistors (10) verbunden ist und einen zweiten Strom (38) in einer vorgegebenen Richtung abgibt, der den Leistungstransistor (10) leitend macht, wenn der erste Strom (36) anwächst; und mit einem Shunttransistor (32), der den zweiten Strom (38) von der Basis des Leistungstransistors (10) nach Masse auf ein zugeführtes Signal (34) ableitet und den Leitzustand des Leistungstransistors (10) beendet; dadurch gekennzeichnet, daß die Ausgangsstufe einen Stromregler (24) enthält, der in Reihe zum zweiten Ende der Sekundärwicklung (20) geschaltet ist und den zweiten Strom (38) so steuert, daß er einen vorbestimmten Wert annimmt und nur in die vorgegebene Richtung fließt und daß die gemeinsame Verbindung zwischen der Drossel (26) und dem Stromregler (24) über eine Stromspeicherdiode (28) mit Masse verbunden ist; wobei für den Fall, daß der Shunttransistor (32) leitet und den zweiten Strom (38) von der Basis des Leistungstransistors (10) ableitet, der zweite Strom (38) in einer geschlossenen Stromaufrechterhaltungsschleife (50) gespeichert wird, die die Drossel (26), den Shunttransistor (32) und die Stromspeicherdiode (28) umfaßt; und wobei für den späteren Fall, in dem sich der Shunttransistor (32) erneut im Sperrzustand befindet, der gespeicherte (50) zweite Strom (38) erneut an die Basis des Leistungstransistors (10) abgegeben wird.

2. Ausgangsstufe nach Anspruch 1, dadurch gekennzeichnet, daß in Reihe zum Stromregler (24) eine Reihendiode (22) geschaltet ist, die die Flußrichtung des zweiten Stromes (38) nur in die erste Richtung sicherstellt.

3. Ausgangsstufe nach Anspruch 1 oder 2, dadurch gekennzeichnet, daß der Emitter des Leistungstransistors (10) über einen Widerstand (30) mit Masse verbunden ist.

4. Ausgangsstufe nach einem der vorstehenden Ansprüche, dadurch gekennzeichnet, daß der Transformator (14) eine Leistungswicklung (18) zur Leistungsabgabe enthält.

**Revendications**

1. Etage de sortie pour alimentation de puissance à découpage comportant un transistor de puissance (10) dont l'émetteur est couplé à la masse, un transformateur (14) avec un primaire (12) branché de façon à recevoir un premier courant (36) du collecteur du transistor de puissance (10) et un secondaire (20) dont une première borne est reliée à l'émetteur du transistor de puissance et la seconde borne est reliée par une inductance (26) à la base du transistor de puissance (10), pour fournir un second courant (38) dans une direction déterminée, de façon à être mise en oeuvre pour que le transistor de puissance (10) devienne conducteur lorsque le premier courant (36) augmente d'amplitude et un transistor-shunt (32) branché de façon à dévier le second courant (38) de la base du transistor de puissance (10) à la masse en réponse à l'application d'un signal (34) pour que le transistor de puissance (10) se bloque, cet étage de sortie étant caractérisé en ce qu'il comporte un régulateur de courant (24), branché en série sur la seconde borne du secondaire (20), et commandant le second courant (38) pour avoir une valeur prédéterminée et ne passer que dans une direction donnée et un point commun entre l'inductance (26) et le régulateur de courant (24), ce point étant relié à la masse par une diode de stockage de courant (28), et dans le cas où le transistor-shunt (32) est conducteur et dérive le second courant (38) de la base vers le transistor de puissance (10), ce second courant (38) est stocké dans une boucle de courant de maintien (50) comprenant l'inductance (26), le transistor-shunt (32) et la diode de stockage de courant (28), et lorsqu'ultérieurement le transistor-shunt (32) devient de nouveau conducteur, le second courant (38) accumulé (50) est de nouveau disponible pour la base du transistor de puissance (10).

2. Etage de sortie selon la revendication 1, caractérisé en ce que le régulateur de courant (24) se compose de diodes montées en série (22) pour s'assurer que le second courant (38) ne passe que dans cette première direction.

3. Etage de sortie selon la revendication 1 ou la revendication 2, caractérisé en ce que l'émetteur du transistor de puissance (10) est relié à la masse par une résistance (30).

4. Etage de sortie selon l'une quelconque des revendications précédentes, caractérisé en ce que le transformateur (14) se compose d'un enroulement de puissance (18) pour fournir la puissance du transformateur.

0 076 022

FIG.I

1

## FIG.2

## COLLECTOR CURRENT

## FIG.3A

## BASE CURRENT

## FIG.3B

FIG.4

FIG.5

FIG.6